Europäisches Patentamt

European Patent Office

Office européen des brevets

(19)

(11) Publication number: **0 279 487 B1**

# EUROPEAN PATENT SPECIFICATION

(12)

(45) Date of publication of patent specification: **15.01.92**  (51) Int. Cl.⁵: **F02C 9/54**, F02C 9/28

(21) Application number: **88200249.6**

(22) Date of filing: **12.02.88**

(54) **Regulation system for double-shaft gas turbines.**

(30) Priority: **20.02.87 IT 1943287**

(43) Date of publication of application:
**24.08.88 Bulletin  88/34**

(45) Publication of the grant of the patent:
**15.01.92 Bulletin  92/03**

(84) Designated Contracting States:
**CH DE FR GB LI**

(56) References cited:
**US-A- 4 299 088**
**US-A- 4 539 810**

(73) Proprietor: **NUOVOPIGNONE INDUSTRIE MEC-
CANICHE E FONDERIA S.p.A.**
**Via F. Matteucci 2**
**I-50127 Florence(IT)**

(72) Inventor: **Benvenuti, Erio**
**Via E. Orcagna 68**
**I-50121 Florence(IT)**
Inventor: **Innocenti, Bruno**
**Via Puccini, 7**
**I-50051 Castelfiorentino Florence(IT)**

(74) Representative: **Roggero, Sergio et al**
**Ing. Barzanò & Zanardo Milano S.p.A. Via
Borgonuovo 10**
**I-20121 Milano(IT)**

Rank Xerox (UK) Business Services

**Description**

The present invention relates to a regulation system which makes it possible a double-shaft gas turbine with a high cycle compression ratio to be accomplished, which is endowed with a wide power regulation range inside which high efficiencies are maintained, also independently from ambient temperature.

From the prior state of the art, several types of systems for double-shaft gas turbines regulating are known, one of which is initially based on the regulation of fuel injection and of the orientation of the movable nozzles of the power turbine until the minimum revolution speed at which the compressor normally operates, is reached; and subsequently, for a further reduction of power fed by the gas turbine, the orientation is controlled of one row only of movable stator-blades, with the number of revolutions per minute, i.e., the revolution speed, of said compressor being kept constant.

The above said regulation system makes it possible the efficiency of the gas turbine to be maintained substantially constant within a wide range of variation of the power of the same turbine.

Said system is however efficient only when it is applied to gas turbines having medium values of compression ratio, i.e., values of the order of 7 ÷ 8, and which are inherently more elastic from the view point of the preservation of efficiency with varying loads (power). In the field of the high compression ratios, of the order of 14 ÷ 15, and therefore with higher cycle efficiencies, on the contrary an intrinsic limitation exists in the range of variation of power inside which said high efficiencies are accomplished , because the efficiency, which is maximum at design point, decreases, when the operating conditions become different from said design point, faster than it would do in case of gas turbines with lower compression ratios. Another approach tendered by the prior art, which, however, is directed to ameliorating the adverse effects of cyclic load applications, rather than to improving the efficiency of a turbine, can be found in US-A-4 299 088, in which air flow is governed to control the output of the gas turbine while fuel flow in controlled to hold the firing or exhaust temperatures substantially constant. Still another prior art disclosure is US-A-4 539 810 which discloses a control apparatus comprising an acceleration condition detecting mechanism intended to control, as a function of the acceleration, the speed for opening variable nozzles in the inlet portion of a power turbine and/or variable inlet guide vanes installed in the inlet portion of a compressor of the engine.

The purpose of the present invention is precisely to obviate the drawback outlined above, and, therefore, to provide a regulating system for a two-shaft gas turbine, which makes it possible to obtain a higher efficiency by means of higher compression ratios, the efficiency drop being simultaneously minimized within a wide range of power variations, and independently of the ambient temperature.

Therefore, according to the prior art (see US-A-4 299 088), there is provided a regulating system to maintain a constant high efficiency for a double-shaft turbine having a high-compression-ratio compressor provided with a plurality of rows of movable stator blades with a power turbine equipped with movable nozzles (18), a, combustion chamber to which fuel is delivered through a regulating electrovalve and designed for a specific design ambient temperature, which comprises:

a) a sensor for detecting the number of revolutions per min of said power turbine and for generating a first signal representative of the number of revolutions per min of said power turbine;

b) a comparator unit for accepting said first signal and producing a first output signal when said first signal is compared to a first reference value;

c) a means for accepting said first output signal for varying said regulating electrovalve;

d) a sensor for detecting the number of revolutions per min of the shaft of said high-compression ratio compressor and for generating a second signal representative of the number of revolutions per min of said high-compression-ratio compressor shaft;

(e) a comparator for accepting said second signal and for producing a second output signal when said second signal is compared to a second reference signal;

f) a means for accepting said second output signal for governing said movable nozzles of said power turbine; whereby according to the invention, there is provided the further features:

g) a sensor for detecting the ambient temperature as a third reference value and a compensating unit connected to said sensor for generating a third output signal when said second signal is compensated by said compensating unit, and

h) a means for accepting said third output signal for governing said movable stator-blades of said high-compression-ratio compressor

In another version, there is provided from the prior art (see US-A-4 299 088) a regulating system to maintain a constant high efficiency for a double-shaft turbine having a high-compression-ratio compressor provided with a plurality of rows of movable stator blades with a power turbine equipped with movable nozzles a combustion chamber to which fuel is delivered through a regulating electrovalve, and designed for a specific design ambient temperature, which comprises:

2

a) a sensor for detecting the number of revolutions per min of said power turbine and for generating a first signal representative of the number of revolutions per min of said power turbine;

b) a comparator unit for accepting said first signal and producing a first output signal when said first signal is compared to a first reference value;

c) a means for accepting said first output signal for varying said regulating electrovalve;

d) a sensor for detecting the temperature of the exhaust gases of said power turbine and for generating a second signal representative of the temperature of the exhaust gases of said power turbine;

e) a comparator for accepting said second signal and for producing a second output signal when said second signal in compared to a second reference value;

f) a means for accepting said second output signal for governing said movable nozzles of said power turbine; whereby according to the invention, there is provided the further features:

g) a sensor for detecting the number of revolutions per min of the shaft of said high-compression-ratio compressor and for generating a third signal representative of the number of revolutions per min of the shaft of said high-compression-ratio compressor;

h) a sensor for detecting the ambient temperature as a third reference value and a compensating unit connected to said sensor for generating a third output signal when said third signal is compensated by said compensating unit and

i) a means for accepting said third output signal for governing said movable stator-blades of said high-compression-ratio compressor.

More particularly, by causing the orientation of the movable stator blades of the compressor to be varied concurrently with the fuel injection and the orientation of the movable nozzles of the power turbine as a linear function of the RPM of the compressor shaft, continuously corrected on the basis of the ambient temperature, the eficiency of the turbine is improved.

Still more particularly, the RPM of the compressor shaft is detected and compensated for relative to the ambient temperature, on the basis of the formula:

$$N_c = \frac{N}{\sqrt{T/T_r}}$$

wherein:

$N_c$ is the RPM of the compressor shaft, corrected as a function, of the absolute (°K) ambient temperature;

N is the measured RPM of the compressor shaft;

T is the absolute (°K) ambient temperature, and

Tr is an absolute (°K) reference or design ambient temperature.

The invention is now better explained by referring to the hereto attached drawing, which depicts a preferred form of practical embodiment, given for only illustrative and non-limitative purposes, because technical and structural variants may be supplied at any time, without departing from the purview of the present invention.

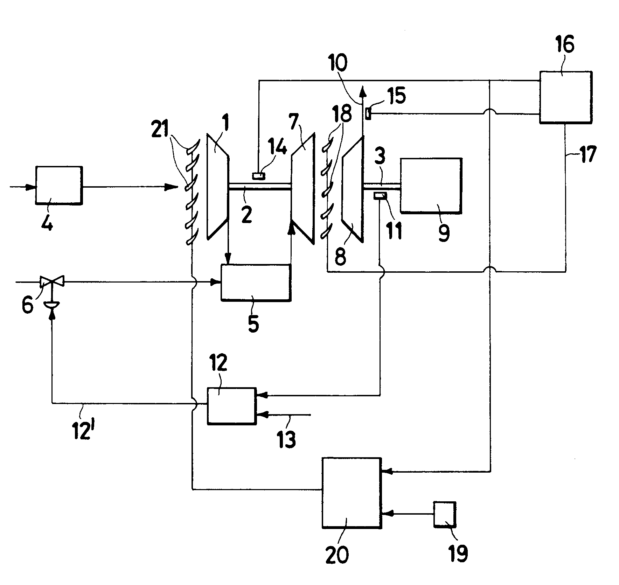

In said drawing, the figure shows a diagram of the regulating system for a double-shaft gas turbine, having a high compression ratio, according to the invention.

Referring to said figure, by the reference numeral 1 the compressor of a double-shaft gas turbine is indicated, with the two shafts of the turbine being respectively indicated by the reference numerals 2 and 3, which compressor compresses air intaken through the filter 4, and delivers it into the combustion chamber 5, to which also the fuel comes, through the regulating electrovalve 6. The flue gases expand first inside the turbine 7, which drives the compressor 1 through said shaft 2, and subsequently inside the power turbine 8, which drives an operating machine, or a generator 9, and are then discharged to atmosphere through the exhaust 10.

The revolution speed, or number of revolutions per minute of the shaft 3 of the power turbine 8 detected by the sensor 11 is compared inside the comparator unit 12 to a reference or set value, 13, and the output 12' from the comparator unit 12 is used in order to drive the fuel electrovalve 6. Simultaneouly to the above, the number of revolutions per minute N of the shaft 2 of the compressor 1, detected by the sensor 14, or the temperature of the gases at exhaust 10, detected by the sensor 15, are compared to set values inside the comparator unit 16, which governs, by means of its output 17, the movable nozzles 18 of the power turbine 8.

Finally, the number of revolutions per minute N detected by the said sensor 14 is also input, together with the value of the ambient temperature T detected by means of the sensor 19, to a unit 20 which performs the compensation of said number of revolutions per minute N relatively to said temperature, in order to obtain a signal equal to the corrected number of revolutions per minute

$$N_c = \frac{N}{\sqrt{T/T_r}}$$

by means of which the movable stator-blades 21 of compressor 1 are governed.

## Claims

1. A regulating system to maintain a constant high efficiency far a double-shaft turbine having a high-compression-ratio compressor (1) provided with a plurality of rows of movable stator blades (21), with a power turbine (8) equipped with movable nozzles (18), a combustion chamber (5) to which fuel is delivered through a regulating electrovalve (6), and designed for a specific design ambient temperature, comprising:

   a) a sensor (11) for detecting the number of revolutions per min of said power turbine (8) and for generating a first signal representative of the number of revolutions per min of said power turbine (8);

   b) a comparator unit (12) for accepting said first signal and producing a first output signal (12') when said first signal is compared to a first reference value (13);

   c) a means for accepting said first output signal (12') for varying said regulating electrovalve (6);

   d) a sensor (14) for detecting the number of revolutions per min of the shaft (2) of said high-compression-ratio compressor (1) and for generating a second signal representative of the number of revolutions per min of said high-compression-ratio compressor shaft (2);

   (e) a comparator (16) for accepting said second signal and for producing a second output signal (17) when said second signal is compared to a second reference signal;

   f) a means for accepting said second output signal (17) for governing said movable nozzles (18) of said power turbine (8); and characterised by :

   g) a sensor (19) for detecting the ambient temperature as a third reference value and a compensating unit (20) connected to said sensor (19) for generating a third output signal when said second signal is compensated by said compensating unit (20), and

   h) a means for accepting said third output signal for governing said movable stator-blades ((21) of said high-compression-ratio compressor (1).

2. A regulating system according to Claim 1, wherein said third output signal is said second signal divided by the square root of the ratio of said ambient temperature to said design ambient temperature.

3. A regulating system to maintain a constant high efficiency for a double-shaft turbine having a high-compression-ratio compressor (1) provided with a plurality of rows of movable stator blades (21), with a power turbine (8) equipped with movable nozzles (18), a combustion chamber (5) to which fuel is delivered through a regulating electrovalve (6), and designed for a specific design ambient temperature, comprising:

   a) a sensor (11) for detecting the number of, revolutions per min of said power turbine (8) and for generating a first signal representative of the number of revolutions per min of said power turbine (8);

   b) a comparator unit (12) for accepting said first signal and producing a first output signal (12') when said first signal is compared to a first reference value (13);

   c) a means for accepting said first output signal (12') for varying said regulating electrovalve (6);

   d) a sensor (15) for detecting the temperature of the exhaust gases of said power turbine (8) and for geerating a second signal representative of the temperature of the exhaust gases of said power turbine;

e) a comparator (16) for accepting said second signal and for producing a second output signal when said second signal in compared to a second reference value;

f) a means for accepting said second output signal for governing said movable nozzles (18) of said power turbine (8); and characterised by :

g) a sensor for detecting the number of revolutions per min of the shaft (2) of said high-compression-ratio compressor (1) and for generating a third signal representative of the number of revolutions per min of the shaft (2) of said high-compression-ratio compressor (1);

h) a sensor (19) for detecting the ambient temperature as a third reference value and a compensating unit (20) connected to said sensor (19) for generating a third output signal when said third signal is compensated by said compensating unit (20), and

i ) a means for accepting said third output signal for governing said movable stator-blades (21) of said high -compression-ratio compressor (1).

4. A regulating system according to Claim 3, wherein said third output signal is said second signal divided by the square root of the ratio of said ambient temperature to said design ambient temperature.

**Revendications**

1. Système de régulation pour maintenir un rendement élevé constant pour une turbine à arbre double ayant un compresseur (1) à taux de compression élevé muni d'une pluralité de rangées de lames de stator mobiles (21), avec une turbine de puissance (8) équipée de buses mobiles (18), une chambre de combustion (5) à laquelle du combustible est délivré par l'intermédiaire d'une électrovanne de régulation (6), et conçue pour une température ambiante théorique spécifique, comportant :

a) un détecteur (11) pour détecter le nombre de tours/minute de ladite turbine de puissance (8) et pour générer un premier signal représentatif du nombre de tours/minute de ladite turbine de puissance (8);

b) une unité de comparaison (12) pour accepter ledit premier signal et pour produire un premier signal de sortie (12') lorsque ledit premier signal est comparé à une première valeur de référence (13);

c) des moyens pour accepter ledit premier signal de sortie (12') pour faire varier ladite électrovanne de régulation (6);

d) un détecteur (14) pour détecter le nombre de tours/minute de l'arbre (2) dudit compresseur (1) à taux de compression élevé et pour générer un deuxième signal représentatif du nombre de tours/minute dudit arbre (2) du compresseur à taux de compression élevé;

e) un comparateur (16) pour accepter ledit deuxième signal et pour produire un deuxième signal de sortie (17) lorsque ledit deuxième signal est comparé à un deuxième signal de référence;

f) des moyens pour accepter ledit deuxième signal de sortie (17) pour gouverner lesdites buses mobiles (18) de ladite turbine de puissance (8); et caractérisé par :

g) un détecteur (19) pour détecter la température ambiante formant une troisième valeur de référence et une unité de compensation (20) connectée audit détecteur (19) pour générer un troisième signal de sortie lorsque ledit deuxième signal est compensé par ladite unité de compensation (20), et

h) des moyens pour accepter ledit troisième signal de sortie pour gouverner lesdites lames (21) de stator mobiles dudit compresseur (1) à taux de compression élevé.

2. Système de régulation selon la revendication 1, dans lequel ledit troisième signal de sortie est ledit deuxième signal de sortie divisé par la racine carrée du rapport de ladite température ambiante à ladite température ambiante théorique.

3. Système de régulation pour maintenir un rendement élevé constant pour une turbine à arbre double ayant un compresseur (1) à taux de compression élevé muni d'une pluralité de rangées de lames (21) de stator mobiles, avec une turbine de puissance (8) équipée de buses mobiles (18), une chambre de combustion (5) à laquelle du combustible est délivré par l'intermédiaire d'une électrovanne de régulation (6) et conçue pour une température ambiante théorique spécifique, comportant :

a) un détecteur (11) pour détecter le nombre de tours/minute de ladite turbine de puissance (8) et pour générer un premier signal représentatif du nombre de tours/minute de ladite turbine de puissance (8);

b) une unité de comparaison (12) pour accepter ledit premier signal et pour produire un premier signal de sortie (12') lorsque ledit premier signal est comparé à une première valeur de référence (13);

c) des moyens pour accepter ledit premier signal de sortie (12') pour faire varier ladite électrovanne de régulation (6);

d) un détecteur (15) pour détecter la température des gaz d'échappement de ladite turbine de puissance (8) et pour générer un deuxième signal représentatif de la température des gaz d'échappement de ladite turbine de puissance;

e) un comparateur (16) pour accepter ledit deuxième signal et pour produire un deuxième signal de sortie lorsque ledit deuxième signal est comparé à une deuxième valeur de référence;

f) des moyens pour accepter ledit deuxième signal de sortie pour gouverner lesdites buses mobiles (18) de ladite turbine de puissance (8); et caractérisé par :

g) un détecteur pour détecter le nombre de tours/minute de l'arbre (2) dudit compresseur (1) à taux de compression élevé et pour générer un troisième signal représentatif actif du nombre de tours/minute de l'arbre (2) dudit compresseur (1) à taux de compression élevé;

h) un détecteur (19) pour détecter la température ambiante formant la troisième valeur de référence et une unité de compensation (20) connectée audit détecteur (19) pour générer un troisième signal de sortie lorsque ledit troisième signal est compensé par ladite unité de compensation (20), et

i) des moyens pour accepter ledit troisième signal de sortie afin de gouverner lesdites lames mobiles (21) de stator dudit compresseur (1) à taux de compression élevé.

4. Système de régulation selon la revendication 3, dans lequel ledit troisième signal de sortie est ledit deuxième signal de sortie divisé par la racine carrée du rapport de ladite température ambiante à ladite température ambiante théorique.


**Patentansprüche**

1. Regelsystem zur Aufrechterhaltung eines konstant hohen Wirkungsgrades einer Doppelwellenturbine mit einem Verdichter (1), der ein hohes Verdichtungsverhältnis aufweist und mit mehreren Reihen von bewegbaren Statorschaufeln (21) versehen ist, mit einer Leistungsturbine (8), die mit bewegbaren Düsen (18) ausgestattet ist, und einer Brennkammer (5), der Brennstoff über ein Elektro-Regelventil (6) zugeführt wird, wobei das Regelsystem für eine spezielle Umgebungstemperatur ausgelegt ist, mit:

a) einem Fühler (11) zum Ermitteln der Umdrehungen pro Minute der Leistungsturbine (8) und zur Erzeugung eines ersten Signals, das für die Umdrehungen pro Minute der Leistungsturbine (8) repräsentativ ist;

b) einer Komparatoreinheit (12) zur Aufnahme des ersten Signals und zur Erzeugung eines ersten Ausgangssignals (12'), wenn das erste Signal mit einem ersten Bezugswert (13) verglichen wird;

c) einem Mittel zur Aufnahme des ersten Ausgangssignals (12') zur Veränderung des Elektro-Regelventils (6);

d) einem Fühler (14) zur Ermittlung der Umdrehungen pro Minute der Welle (2) des Verdichters (1) mit hohem Verdichtungsverhältnis und zur Erzeugung eines zweiten Signals, welches für die Umdrehungen pro Minute der Welle (2) des Verdichters mit hohem Verdichtungsverhältnis repräsentativ ist;

e) einem Komparator (16) zur Aufnahme des zweiten Signals und zum Erzeugen eines zweiten Ausgangssignals (17), wenn dieses zweite Signal mit einem zweiten Bezugssignal verglichen wird;

f) einem Mittel zur Aufnahme des zweiten Ausgangssignals (17) zur Steuerung der bewegbaren Düsen (18) der Leistungsturbine (8); und gekennzeichnet durch:

g) einen Fühler (19) zum Ermitteln der Umgebungstemperatur als dritter Bezugswert und eine Kompensationseinheit (20), die mit dem Fühler (19) verbunden ist, um ein drittes Ausgangssignal zu erzeugen, wenn das zweite Signal durch die Kompensationseinheit (20) kompensiert wird, und

h) ein Mittel zur Aufnahme des dritten Ausgangssignals zur Steuerung der bewegbaren Statorschaufeln (21) des Verdichters (1) mit hohem Verdichtungsverhältnis.

2. Regelsystem nach Anspruch 1, bei welchem das dritte Ausgangssignal aus dem zweiten Signal dividiert durch die Quadratwurzel des Verhältnisses der Umgebungstemperatur zur Auslegungs-Umgebungstemperatur gebildet wird.

3. Regelsystem zum Aufrechterhalten eines konstant hohen Wirkungsgrades einer Doppelwellenturbine mit einem Verdichter (1) mit hohem Verdichtungsverhältnis, der mehrere Reihen von bewegbaren Statorschaufeln (21) aufweist, mit einer Leistungsturine (8), die mit bewegbaren Düsen (18) ausgestattet ist, und einer Brennkammer (5), der Brennstoff durch ein Elektro-Regelventil (6) zugeführt wird, wobei das Regelsystem für eine spezielle Umgebungstemperatur ausgelegt ist, mit:

a) einem Fühler (11) zum Ermitteln der Umdrehungen pro Minute der Leistungsturbine (8) und zum Erzeugen eines ersten Signales, welches für die Umdrehungen pro Minute der Leistungsturbine (8) repräsentativ ist;

b) einer Komparatoreinheit (12) zur Aufnahme des ersten Signals und zum Erzeugen eines ersten Ausgangssignals (12'), wenn das erste Signal mit einem ersten Bezugswert (13) verglichen wird;

c) einem Mittel zur Aufnahme des ersten Ausgangssignals (12') zur Veränderung des Elektro-Regelventils (6);

d) einem Fühler (15) zur Ermittlung der Temperatur der Abgase der Leistungsturbine (8) und zur Erzeugung eines zweiten Signals, welches für die Temperatur der Abgase der Leistungsturbine repräsentativ ist;

e) einem Komparator (16) zur Aufnahme des zweiten Signals und zur Erzeugung eines zweiten Ausgangssignals, wenn das zweite Signal mit einem zweiten Bezugswert verglichen wird;

f) einem Mittel zur Aufnahme des zweiten Ausgangssignals zur Steuerung der bewegbaren Düsen (18) der Leistungsturbine (8); und gekennzeichnet durch:

g) einen Fühler zum Ermitteln der Umdrehungen pro Minute der Welle (2) des Verdichters (1) mit hohem Verdichtungsverhältnis und zur Erzeugung eines dritten Signals, welches für die Umdrehungen pro Minute der Welle (2) des Verdichters (1) mit hohem Verdichtungsverhältnis repräsentativ ist;

h) einen Fühler (19) zum Ermitteln der Umgebungstemperatur als dritter Bezugswert und eine Kompensationseinheit (20), die mit dem Fühler (19) verbunden ist, um ein drittes Ausgangssignal zu erzeugen, wenn das dritte Signal durch die Kompensationseinheit (20) kompensiert wird, und

i) ein Mittel zur Aufnahme des dritten Ausgangssignals zur Steuerung der beweglichen Statorschaufeln (21) des Verdichters (1) mit hohem Verdichtungsverhältnis.

4. Regelsystem nach Anspruch 3, bei welchem das dritte Ausgangssignal aus dem zweiten Signal dividiert durch die Quadratwurzel des Verhältnisses der Umgebungstemperatur zur Auslegungs-Umgebungstemperatur gebildet wird.